# FASCICULE DE BREVET EUROPEEN

(11) **EP 2 830 856 B1**
(45) Date de publication et mention de la délivrance du brevet: **28.04.2021**
(21) Numéro de dépôt: 13713101.7
(22) Date de dépôt: 13.03.2013
(51) Int. Cl.: B29C 49/58, B29C 49/06

(54) **TUYÈRE POUR LE FORMAGE DE RÉCIPIENTS ÉQUIPÉE D'UN NEZ INTERCHANGEABLE DANS LEQUEL SONT EMPRISONNÉS DES ÉLÉMENTS ADAPTÉS AU FORMAT DU COL DU RÉCIPIENT**
DÜSE ZUM FORMEN VON BEHÄLTERN MIT EINER AUSTAUSCHBAREN SPITZE MIT EINGEBETTETEN ELEMENTEN MIT AN DEN HALS DES BEHÄLTERS ANGEPASSTEM FORMAT
NOZZLE FOR FORMING CONTAINERS PROVIDED WITH AN INTERCHANGEABLE TIP IN WHICH ELEMENTS MATCHING THE FORMAT OF THE NECK OF THE CONTAINER ARE EMBEDDED

(30) Priorité: 27.03.2012 FR 1252717
(43) Date de publication de la demande: 04.02.2015
(73) Titulaire: Sidel Participations, 76930 Octeville-sur-Mer (FR)
(72) Inventeur: DUCLOS, Yves-Alban, 76930 Octeville Sur Mer (FR); CARDINE, Denis, 76930 Octeville Sur Mer (FR)
(74) Mandataire: Sidel Group
(86) Numéro de dépôt international: PCT/EP2013/055127
(87) Numéro de publication internationale: WO 2013/143848

(56) Documents cités:
- EP-A1- 1 927 461
- EP-A1- 2 202 049
- WO-A2-2009/007315
- DE-A1-102008 025 775
- FR-A1- 2 944 468

## Description

L'invention concerne une tuyère pour le formage de récipients en matériau thermoplastique comportant un nez de tuyère amovible.

L'invention concerne plus particulièrement une tuyère pour le formage de récipients en matériau thermoplastique par injection d'un fluide sous pression dans un col d'une préforme, la tuyère comportant :
- un support qui est muni d'une conduite d'arrivée de fluide sous pression selon un axe vertical ;
- un nez de tuyère qui prolonge axialement la conduite d'arrivée et qui est susceptible d'être raccordé de manière étanche au col de la préforme par l'intermédiaire d'au moins un élément adapté au format du col ;
- des moyens de fixation amovible du nez de tuyère sur le support.

Dans une installation de ce type, chaque récipient final est obtenu par soufflage d'une préforme chauffée à une température déterminée. La préforme chaude est insérée dans un moule puis une tuyère est raccordée au col de la préforme de manière à souffler un fluide formage sous pression à l'intérieur de la préforme. Sous l'effet de la pression, les parois de la préforme viennent épouser les parois du moule pour former le récipient final.

Le col d'une préforme présente déjà sa forme définitive. Il est donc impératif de préserver l'intégrité du col durant l'opération de formage.

Les installations de fabrication de récipients en matériau thermoplastique sont conçues de manière à pouvoir fabriquer des récipients de formes et de dimensions variées. Ainsi, une même installation est susceptible de traiter des préformes présentant des cols de formats variés.

Pour réaliser un soufflage efficace, sans perte d'énergie, et sans abîmer le col de chaque préforme, il est nécessaire de changer certains éléments de la tuyère, couramment appelés "éléments de personnalisation". Ces éléments présentent des dimensions adaptées à chaque format de col. Par la suite, ces éléments seront appelés "éléments adaptés".

Le nez de tuyère présente généralement la forme d'un boîtier qui est monté sur le support par l'intermédiaire de moyens de fixation. Il est connu de fixer les éléments adaptés par interposition entre le nez de tuyère et le support.

Tel est le cas de la tuyère décrit par FR2944468. Par ailleurs le document EP2202049 décrit une tuyère selon le préambule de la revendication 1, sans moyen de fixation amovible du nez sur le support.

Le boîtier du nez de tuyère est ouvert vers le haut par une ouverture supérieure. Les éléments adaptés sont disposés dans le boîtier du nez de tuyère à travers l'ouverture supérieure. Les éléments adaptés ne sont cependant pas fixés dans le boîtier. Lorsque le boîtier est monté sur le support, le support obture l'ouverture supérieure du boîtier, retenant ainsi les éléments adaptés en position dans le boîtier.

Lorsque le nez de tuyère est retiré, les éléments adaptés sont libres d'être retirés du boîtier pour être échangés par d'autres éléments adaptés avant de fixer à nouveau le même boîtier sur le support.

Un tel dispositif ne permet cependant pas d'effectuer un changement rapide de la tuyère. Chaque élément adapté doit en effet être changé un par un.

De plus, lorsque le nez de tuyère est démonté, les éléments adaptés ne sont plus retenus dans le boîtier. On risque alors de perdre ces éléments.

En outre, les moyens de fixation du nez de tuyère sur le support ne permettent pas de démonter le nez de tuyère de manière rapide.

En outre, les moyens de fixation du nez de tuyère sur le support ne permettent pas de démonter le nez de tuyère de manière rapide.

Pour remédier notamment à ces inconvénients, l'invention propose une tuyère selon la revendication 1.

Selon d'autres caractéristiques de l'invention :
- les éléments adaptés comportent un joint d'étanchéité qui est destiné à entourer le col de la préforme avec un jeu radial déterminé entre le col et le joint d'étanchéité ;
- les éléments adaptés comportent un tube de stabilisation destiné à être coaxial au col de la préforme et de diamètre tel qu'un bord circulaire d'extrémité inférieur du tube est reçu contre un buvant du col ;
- le tube de stabilisation est monté coulissant axialement dans le nez de tuyère entre une position inférieure de butée contre une première face de butée du nez et une position supérieure de butée contre une deuxième face de butée du nez ;
- le tube de stabilisation est contraint élastiquement vers sa position inférieure de butée par l'intermédiaire d'un organe élastique qui est logé à demeure dans le support ;
- le support comporte un chariot coulissant axialement entre une position supérieure de repos et une position inférieure de formage, le nez de tuyère étant fixé sur le chariot ;
- l'organe élastique agit sur le tube de stabilisation par l'intermédiaire d'une tige qui est monté coulissante dans le support, la tige étant reçue serrée dans un jonc élastique porté par le tube de stabilisation pour rendre le tube de stabilisation temporairement solidaire en déplacement avec la tige ;
- un joint d'étanchéité est interposé radialement entre le support et le nez de tuyère pour permettre un raccord étanche du nez avec la conduite d'arrivée en position de soufflage du chariot ;
- le joint d'étanchéité est porté par le support ;
- les moyens de fixation amovible comportent une partie mâle et une partie femelle qui sont susceptibles d'être emboîtées axialement l'une dans l'autre ;
- les moyens de fixation comportent un mécanisme de verrouillage comportant une portée tronconique qui est fixe sur la partie mâle et comportant des billes qui sont portées avec débattement radial par la partie femelle, les billes étant susceptibles d'occuper une position interne de verrouillage dans laquelle elles sont poussées contre la portée conique pour fixer la partie mâle avec la partie femelle ;
- la portée tronconique présente une forme de révolution autour de l'axe de tuyère de manière que les billes puissent occuper leur position de verrouillage quelle que soit l'orientation du nez de tuyère autour de son axe ;
- la partie femelle comporte une cage périphérique munie de trous dans lesquels sont logées des billes, et un verrou muni d'une rampe annulaire, monté autour de ladite cage, déplaçable entre une position de verrouillage dans laquelle la rampe se trouve radialement au droit des billes, et une position de libération dans laquelle la rampe est écartée des billes ;
- le support porte la cage périphérique, la cage délimitant radialement vers l'extérieur un espace annulaire dans lequel est monté un coulisseau déplaçable entre une position de verrouillage dans laquelle il se trouve radialement au droit des billes, et une position de libération dans laquelle il est écarté des billes ;
- la cage et le chariot forment un ensemble monobloc ;
- le coulisseau est sollicité vers sa position de verrouillage par au moins un ressort de rappel ;
- le verrou est sollicité vers sa position de verrouillage par au moins un ressort de rappel ;
- le verrou porte la rampe annulaire.

L'invention concerne aussi un système comprenant une tuyère précitée et un dispositif de changement d'un nez de la tuyère caractérisé en ce le dispositif comporte un premier organe de démontage qui est adapté pour saisir le verrou dans sa position de verrouillage, l'organe de démontage étant mobile de manière à commander le verrou entre sa position de verrouillage et sa position de libération.

Selon d'autres caractéristiques du dispositif de changement :
- le dispositif comporte au moins un deuxième organe de maintien qui est adapté pour saisir un nez de tuyère, l'organe de maintien étant mobile de manière à déplacer le nez de tuyère entre sa position emboîtée dans l'élément femelle et une position déboîtée de l'élément femelle ;
- les mouvements du premier organe de démontage et/ou du deuxième organe de maintien sont commandés automatiquement.

D'autres caractéristiques et avantages apparaîtront au cours de la lecture de la description détaillée qui va suivre pour la compréhension de laquelle on se reportera aux dessins annexés parmi lesquels :
- la figure 1 est une vue d'ensemble en coupe axiale selon un plan de coupe vertical transversal qui représente une tuyère équipée d'un nez réalisé selon les enseignements de l'invention, la tuyère occupant une position supérieure de repos au-dessus d'un moule muni d'une préforme ;
- la figure 2 est une vue en perspective qui représente la tuyère de la figure 1, le nez étant démonté ;
- la figure 3 est une vue de détail à plus grande échelle qui représente la partie inférieure de la tuyère de la figure 1 ainsi que le nez ;
- la figure 4 est une vue en coupe de la tuyère de la figure 3 selon un plan de coupe axial vertical longitudinal ;
- la figure 5 est une vue similaire à celle de la figure 3 dans laquelle la tuyère occupe une position inférieure de formage ;
- la figure 6 est une vue similaire à celle de la figure 3 dans laquelle le nez de la tuyère est démonté ;
- la figure 7 est une vue en perspective éclatée qui représente le nez de tuyère de la figure 1.

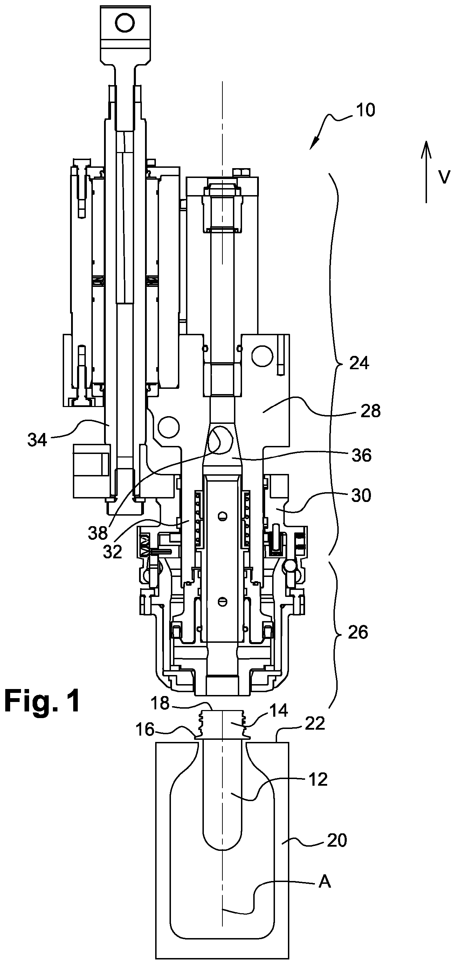

On a représenté à la figure 1 une tuyère 10 pour le formage de récipients en matériau thermoplastique par injection d'un fluide sous pression dans une préforme 12.

Le fluide de formage est ici un gaz, par exemple de l'air comprimé.

De manière connue, la préforme 12 est un récipient en forme de tube à essai d'axe vertical "A" qui est réalisé en un matériau thermoplastique.

Le corps inférieur de la préforme 12 est destiné à être formé par déformation de ses parois. A cet effet, la préforme 12 est chauffée dans un four de conditionnement thermique de manière à rendre ses parois malléables.

La préforme 12 comporte un col 14 qui est agencé à son extrémité supérieure. Le col 14 présente déjà sa forme définitive, c'est-à-dire que le col 14 ne sera pas déformé lors de l'opération de formage. Pour cette raison, le col 14 est maintenu froid.

Le col 14 est séparé du corps de la préforme 12 par une collerette 16 inférieure. Le col 14 est délimité vers le haut par un bord circulaire d'extrémité supérieur qui sera appelé par la suite "buvant 18". La face cylindrique extérieure du col 14 comporte ici un filetage pour la fixation d'un bouchon de fermeture du récipient final.

La préforme 12 ainsi chauffée est reçue dans la cavité d'un moule 20. Le moule 20 comporte une face 22 horizontale supérieure. Le moule 20 comporte dans sa face 22 supérieure un orifice de passage du col 14. La collerette 16 repose sur la face 22 supérieure du moule 20 de manière que le col 14 s'étende en saillie verticalement au-dessus de la face 22 supérieure du moule 20.

Le moule 20 est généralement réalisé en deux demi-moules assemblés selon un plan de joint vertical passant par l'orifice de passage du col 14. Cette configuration permet d'éjecter le récipient final par écartement des deux demi-moules 20 à l'issue de l'opération de formage.

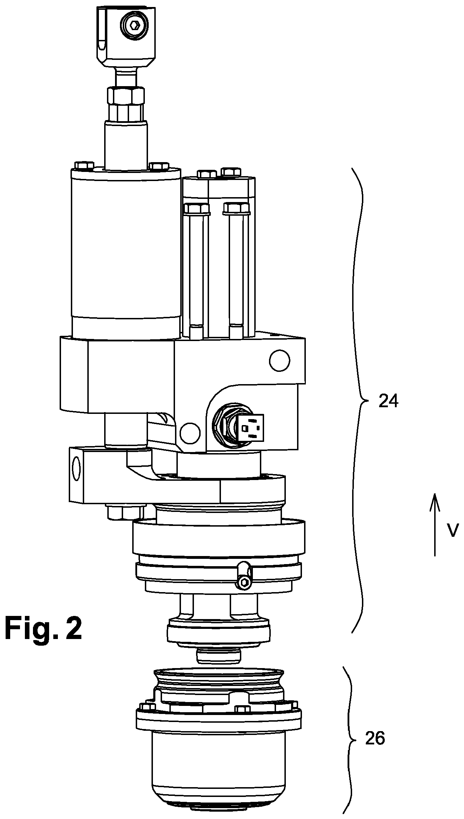

La tuyère 10 va maintenant être décrite en détails. La tuyère 10 comporte principalement un support 24 et un nez 26 amovible de tuyère comme cela est particulièrement visible à la figure 2.

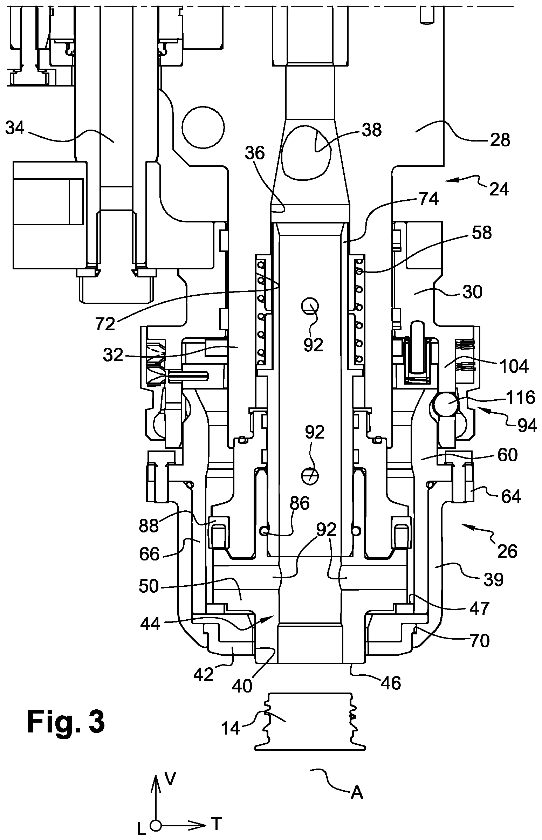

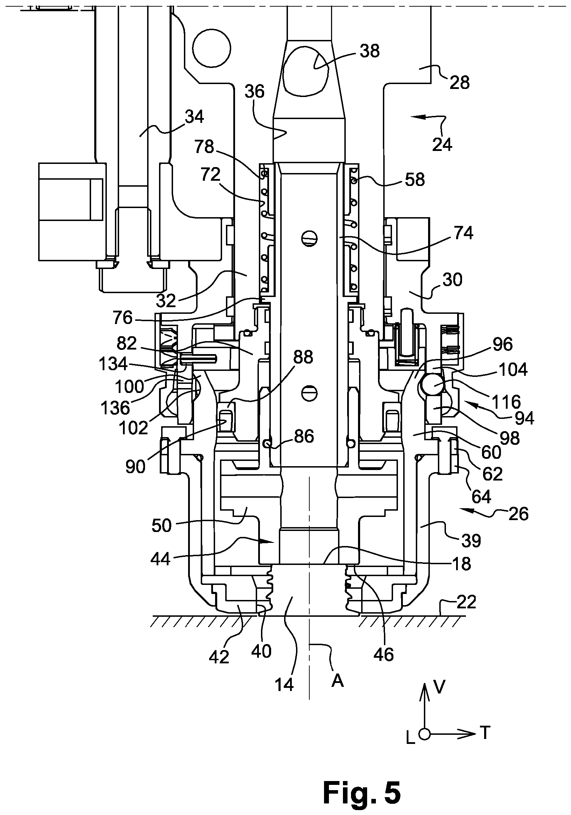

Comme représenté plus en détail à la figure 3, le support 24 comporte un bâti 28 fixe par rapport au moule 20, et un chariot 30 qui est monté coulissant verticalement sur une extrémité inférieure du bâti 28. Le chariot 30 est ainsi coulissant entre une position extrême supérieure de repos, telle que représentée aux figures 1, 3 et 4, et une position extrême inférieure de formage, telle que représentée à la figure 5.

Plus particulièrement l'extrémité inférieure du bâti 28 forme une colonne 32 cylindrique d'axe coaxial à l'axe "A" de la préforme 12. Le chariot 30 présente une forme tubulaire de manière à être monté coulissant autour de la colonne 32.

Les déplacements du chariot 30 sont commandés par un actionneur (non représenté). Il s'agit ici d'un piston dont seule une tige 34 de poussée est représentée. La tige 34 de poussée est guidée en coulissement sur le bâti 28 parallèlement à l'axe "A" de la préforme. L'extrémité inférieure de la tige 34 de poussée est fixée au chariot 30 pour commander aussi bien la montée que la descente du chariot 30.

Le support 24 est muni d'une conduite 36 d'arrivée de fluide sous pression. La conduite 36 est ici agencée coaxialement à l'axe "A" de la préforme 12. La conduite 36 traverse la colonne 32 du bâti de manière à déboucher dans l'extrémité inférieure de la colonne 32. La conduite 36 d'arrivée est susceptible d'être alimentée en fluide sous pression par l'intermédiaire d'un orifice 38 d'alimentation qui débouche radialement dans la conduite 36 d'arrivée au-dessus de la colonne 32.

Le nez 26 de tuyère est monté sur le chariot 30 par l'intermédiaire de moyens de fixation amovible qui seront décrits plus en détails par la suite.

Le nez 26 de tuyère est plus particulièrement agencé à une extrémité inférieure du chariot 30 du support 24, verticalement au droit du col 14 de la préforme 12.

Le nez 26 de tuyère comporte un carter qui se présente sous la forme d'une cloche 39 cylindrique d'axe vertical "A". La cloche 39 est ouverte vers le haut et elle comporte à son extrémité inférieure un orifice 40 dont le diamètre est légèrement supérieur au diamètre de la collerette 16 du col 14.

L'orifice 40 permet le passage du col 14 à l'intérieur de la cloche 39 lorsque le chariot 30 occupe sa position inférieure de formage. Dans cette position de formage du chariot 30, la face inférieure de la cloche 39 est destinée à être en contact avec la face 22 supérieure du moule 20.

Lorsque le nez 26 est fixé au chariot 30, la conduite 36 d'arrivée est raccordée de manière étanche avec l'intérieur de la cloche 39. Le nez 26 prolonge ainsi axialement vers le bas la conduite 36 d'arrivée.

Le nez 26 de tuyère est susceptible d'être raccordé de manière étanche au col 14 de la préforme 12 par l'intermédiaire d'éléments adaptés au format dudit col 14.

Un premier élément adapté est formé par un joint 42 par lequel le nez 26 est appuyé en contact étanche contre la face 22 supérieure du moule 20. A cet effet, le joint 42 est agencé au bas de la cloche 39.

Ce joint 42 présente une forme annulaire et il délimite intérieurement l'orifice 40 de passage du col 14. Le diamètre intérieur du joint 42 entoure la collerette 16 du col 14 avec un jeu radial prédéterminé. Ce jeu radial est le plus réduit possible de manière à empêcher du fluide sous pression de fuir à travers le plan de joint des deux demi-moules 20.

Ainsi, lorsqu'un nouveau format de col 14 doit être soufflé par la tuyère 10, il est préférable de changer le joint 42. En effet, un col 14 trop grand ne pourrait pas être reçu dans un orifice 40 trop petit. Inversement, si le jeu radial entre le col 14 et le joint 42 est trop important, les fuites de fluide de formage à travers le plan de joint risquent d'augmenter sensiblement la consommation de fluide de formage.

Un deuxième élément adapté est formé par un tube 44 de stabilisation 44. Ce tube 44 de stabilisation est agencé dans la cloche 39 de manière coaxiale avec le col 14. Un bord 46 circulaire d'extrémité inférieure du tube 44 de stabilisation est destiné à être reçu contre le buvant 18 du col 14 afin de plaquer la collerette 16 contre la face 22 supérieure du moule 20 lors de l'opération formage. Il est donc nécessaire que le diamètre du tube 44 de stabilisation soit adapté au format du col 14.

L'usage du tube 44 de stabilisation permet notamment d'éviter que la préforme 12 ne soit soulevée du moule 20 lors du formage. Un tel soulèvement aurait pour effet d'introduire du fluide de formage dans la cavité de moulage, induisant ainsi des défauts de formage du récipient.

En outre, à l'issue de l'opération de soufflage, le col 14 du récipient final est saisi automatiquement par une pince (non représentée) préalablement à l'ouverture du moule 20 pour éviter la chute du récipient. Or, le tube 44 de stabilisation permet d'assurer que le col 14 sera correctement saisi par la pince en maintenant le col 14 en position fixe dans le moule 20.

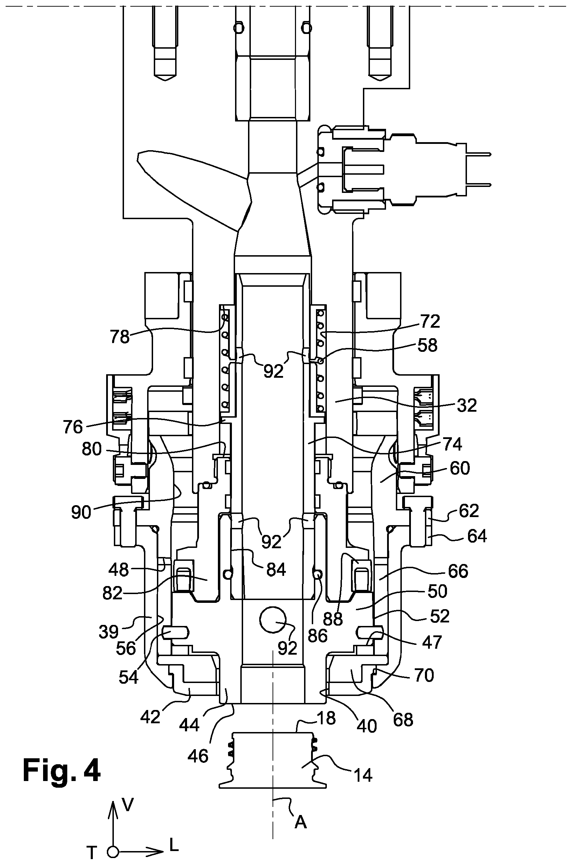

Le tube 44 de stabilisation doit appuyer verticalement vers le bas sur le buvant 18 sans pour autant endommager le col 14. A cet effet, le tube 44 de stabilisation est monté coulissant axialement dans le nez 26 de tuyère entre une position extrême inférieure de butée contre une première face 47 de butée du nez 26, comme illustré aux figures 3 et 4, et une position extrême supérieure de butée contre une deuxième face 48 opposée de butée du nez 26 qui est visible à la figure 4.

Dans la position extrême inférieure, le bord 46 d'extrémité inférieure du tube 44 de stabilisation s'étend verticalement au-dessous du niveau du joint 42 d'étanchéité.

Un disque 50 s'étend radialement vers l'extérieur depuis la paroi cylindrique extérieure du tube 44 de stabilisation. Le disque 50 est agencé globalement à mi-hauteur du tube 44 de stabilisation. Comme représenté à la figure 4, la jante 52 périphérique du disque 50 est en contact radial avec jeu avec la paroi cylindrique interne de la cloche 39 de manière à guider le coulissement vertical du tube 44 de stabilisation.

Pour améliorer encore le guidage en coulissement du tube 44 de stabilisation, la jante 52 est munie de deux tourillons 54, visibles à la figure 4, diamétralement opposés qui s'étendent en saillie. Chaque tourillon 54 est reçu dans une rainure 56 verticale associée qui est formée dans la paroi cylindrique intérieure de la cloche 39.

Pour permettre d'appuyer son bord 46 inférieur contre le buvant 18 du col 14, le tube 44 de stabilisation est contraint élastiquement vers sa position extrême inférieure par un organe 58 élastique qui sera décrit plus en détails par la suite.

Pour faciliter le changement de nez 26 de tuyère, les éléments adaptés 42, 50 sont emprisonnés dans le nez 26 de tuyère indépendamment de sa fixation sur le support. Ainsi, lorsque le nez 26 est démonté du support 24, les éléments 42, 50 adaptés ne risquent pas d'être perdus.

En outre, il est possible de disposer de nez 26 de tuyère prémontés pour chaque format de col 14. Ainsi, le changement de nez 26 de tuyère est rapide.

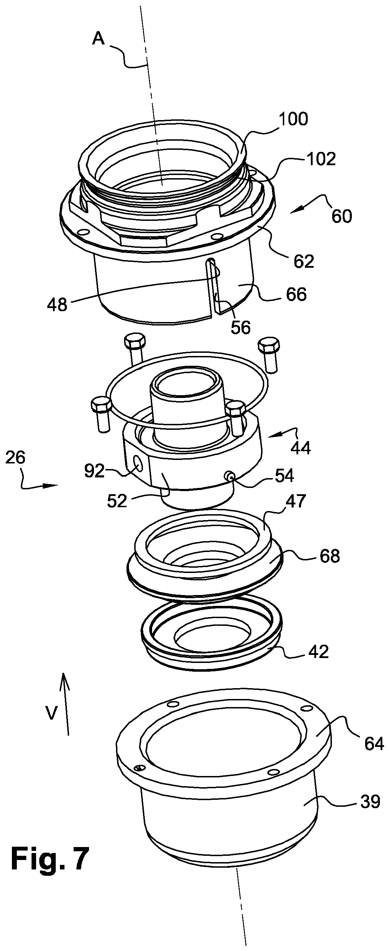

Les éléments adaptés 42, 50 sont emprisonnés dans le nez 26 de tuyère au moyen d'une couronne 60 qui coiffe la cloche 39. Comme représenté notamment à la figure 7, la couronne 60 présente une forme annulaire de manière à permettre le passage de l'extrémité inférieure de la colonne 32 du support 24 dans la cloche 39.

La couronne 60 s'étend sensiblement dans le prolongement vers le haut de la paroi cylindrique de la cloche 39. La couronne 60 présente cependant un diamètre intérieur inférieur à celui de la cloche 39.

La couronne 60 comporte une bride 62 radiale de fixation qui est reçu contre une bride 64 complémentaire de la cloche 39. La fixation est ici réalisée au moyen de vis.

La couronne 60 présente une jupe 66 cylindrique qui s'étend verticalement vers le bas depuis la bride 62. La jupe 66 est reçue dans la cloche 39 à travers l'orifice supérieur de passage en formant une chemise contre la paroi cylindrique interne de la cloche 39.

Le joint 42 d'étanchéité du nez 26 est agencé sous un fond 68 inférieur amovible de la cloche 39.

La cloche 39 comporte à son extrémité inférieure un rétrécissement de section formant une face 70 inférieure d'épaulement qui est tournée vers le haut. Le fond 68 repose en butée verticale contre la face 70 d'épaulement de la cloche 39 avec interposition d'une portion périphérique du joint 42 d'étanchéité. Lorsque la couronne 60 est fixée sur la cloche 39, l'extrémité inférieure de la jupe 66 est en appui contre le fond 68 pour fixer verticalement le fond 68 par rapport à la cloche 39.

En outre, la jupe 66 fait office de paroi de guidage pour le tube 44 de stabilisation. Comme représenté à la figure 7, les rainures 52 de guidage sont réalisées par deux fentes verticales qui sont réalisées dans la jupe 66. Les fentes sont débouchantes vers le bas pour permettre le montage de la couronne 60 après insertion du tube 44 de stabilisation dans la cloche 39 par l'orifice supérieur.

La première face 47 de butée qui forme la butée inférieure pour le tube 44 de stabilisation est formée par un tampon annulaire qui est agencé sur le fond 68 amovible.

La deuxième face 48 de butée qui forme la butée supérieure pour le tube 44 de stabilisation est formée par l'extrémité supérieure des deux fentes 52 de la jupe 66.

Avantageusement, l'organe 58 élastique qui contraint le tube 44 de stabilisation vers le bas est logé à demeure dans le support 24. Ainsi un unique organe 58 élastique sera utilisé pour plusieurs formats de nez 26 de tuyère sans qu'il ne soit nécessaire de changer ledit organe 58 élastique.

L'organe 58 élastique est reçu dans un logement 72 qui est formé dans la conduite 36 d'arrivée qui passe à travers la colonne 32. Il agit sur le tube 44 de stabilisation par l'intermédiaire d'une tige 74 tubulaire d'axe "A" qui est reçue coulissante verticalement dans la conduite 36 d'arrivée de la colonne 32.

Cette tige 74 tubulaire forme une conduite concentrique dans la conduite 36 d'alimentation pour guider le fluide de formage jusqu'à la préforme 12 via le tube 44 de stabilisation.

Le coulissement de la tige 74 tubulaire est limité dans les deux sens au moyen d'une collerette 76 par butée contre une face 78 supérieure de butée et contre une face 80 inférieure de butée. La face 78 supérieure de butée est formée par un épaulement de la conduite 36 d'arrivée, tandis que la face 80 inférieure de butée est formée par un épaulement porté par un anneau 82 de fermeture qui est fixé sous la colonne 32 en entourant la tige 74 tubulaire. L'anneau 82 permet ainsi le montage de l'organe 58 élastique et de la tige 74 tubulaire dans la conduite 36 d'arrivée par insertion par l'extrémité inférieure de la conduite 36.

L'organe 58 élastique est interposé entre la face 78 supérieure de butée et la collerette 76 pour pousser la tige 74 tubulaire vers le bas.

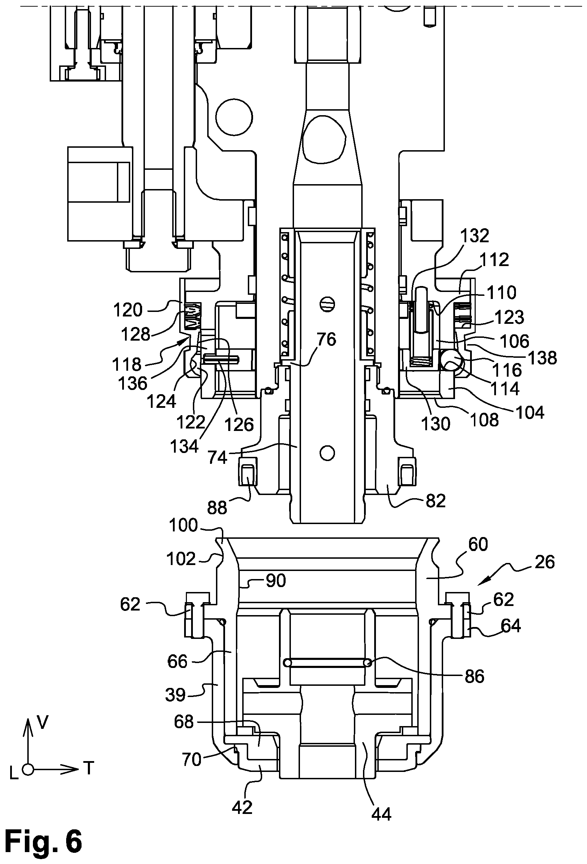

L'extrémité inférieure de la tige 74 tubulaire s'étend en saillie vers le bas par rapport à l'anneau 82, comme cela est visible à la figure 6, de manière à être reçue dans la cloche 39. L'extrémité inférieure de la tige 74 est emmanchée dans un manchon 84 supérieur complémentaire de raccord du tube 44 de stabilisation. La tige 74 tubulaire est ainsi en butée vers le bas contre le tube 44 de stabilisation.

Etant donné que le tube 44 de stabilisation est susceptible de se déplacer avec le chariot 30, tandis que la face 78 supérieure de butée demeure fixe, l'organe 58 élastique est monté précontraint de manière à pousser la tige 74 tubulaire vers le bas quelle que soit sa position, y compris lorsqu'elle est en butée contre la face 80 inférieure de butée, comme représenté à la figure 6.

Par ailleurs, il arrive que le chariot 30 soit commandé vers sa position inférieure de formage en l'absence de préforme 12 dans le moule 20. Une telle utilisation de la tuyère 10 avec un moule 20 à vide est par exemple nécessaire pour effectuer des réglages de l'installation. Lorsque le moule 20 est vide, il est préférable d'éviter que le tube 44 de stabilisation ne tombe contre la face 22 supérieure du moule 20 afin d'empêcher une usure prématurée du moule 20 ou du tube 44 de stabilisation. Le tube 44 de stabilisation risque en effet d'être inséré accidentellement dans l'orifice 40 de passage du col 14 et d'être coincé entre les deux demi-moules 20.

A cet effet, le tube 44 de stabilisation est retenu verticalement sur la tige 74 tubulaire au moyen d'un jonc 86 élastique.

Plus particulièrement, le jonc 86 élastique est reçu dans une gorge circulaire de la paroi interne du manchon 84 avec un jeu radial. Le jonc 86 élastique est destiné à être reçu serré autour de la tige 74 tubulaire avec un effort suffisant pour retenir le tube 44 de stabilisation sur la tige 74. L'effort de serrage est cependant suffisamment faible pour que le nez 26 de tuyère puisse être retirer facilement du support 24.

La tige 74 tubulaire comporte une gorge peu profonde qui permet d'agripper le jonc 86 élastique. Le tube 44 de stabilisation est ainsi rendu temporairement solidaire en déplacement vertical avec la tige 74 tubulaire.

Pour permettre une gestion efficace de la pression du fluide de formage dans la cloche 39, la cloche 39 est raccordée de manière étanche avec la conduite 36 d'arrivée de fluide lorsque le chariot 30 est dans sa position de formage, tandis que la cloche communique directement avec l'atmosphère lorsque le chariot 30 est dans sa position de repos.

A cet effet, l'anneau 82 inférieur de la colonne 32 porte un joint 88 à lèvres périphérique. Comme représenté à la figure 5, le joint 88 à lèvres est intercalé radialement entre une portée 90 annulaire intérieure de la couronne 60 et l'anneau 82 en position de formage du chariot 30 pour raccorder de manière étanche la cloche 39 avec la conduite 36 d'alimentation.

En position de repos du chariot 30, un jeu annulaire est réservé entre le joint 88 à lèvres et la jupe 66, comme illustré aux figures 3 et 4.

En outre, pour que la pression soit homogène dans la cloche 39 lors d'une opération de formage, la tige 74 tubulaire et le tube 44 de stabilisation sont munis d'orifices 92 radiaux qui sont destinés à répartir le fluide de formage dans toutes les zones de la cloche 39 et de la conduite 36 d'arrivée.

On décrit à présent, en référence aux figures 5 et 6, des moyens 94 de fixation amovible qui permettent de monter le nez 26 de tuyère de manière rigide mais non permanente sous le chariot 30 mobile suivant la direction axiale verticale de l'axe "A" de la préforme 12.

Les moyens 94 de fixation comportent une partie 96 mâle et une partie 98 femelle. Dans l'exemple représenté aux figures, la partie 98 femelle est portée par le chariot 30 tandis que la partie 96 mâle est portée par le nez 26 de tuyère.

La partie 96 mâle est formée par un tronçon supérieur de la couronne 60 cylindrique munie, à son extrémité supérieure, d'un bourrelet 100 annulaire en saillie radiale vers l'extérieur, définissant une portée 102 tronconique.

La partie 98 femelle du dispositif 94 de fixation comprend un mécanisme de verrouillage mutuel du nez 26 de tuyère et du chariot 30. Le mécanisme de verrouillage comporte une cage 104 tubulaire périphérique formant un ensemble monobloc avec le chariot 30.

La cage 104 est agencée à l'extrémité inférieure du chariot 30. Elle entoure la bague 82, de manière à réserver entre la cage 104 extérieure, et la bague 82 intérieure, un espace 106 annulaire qui débouche sous la face 108 inférieure du chariot 30, et qui est fermé du côté opposé par un plafond 110.

Le chariot 30 comporte une collerette 112 qui est agencée au-dessus de la cage 104. La collerette 112 s'étend radialement en saillie par rapport à la cage 104 pour définir un épaulement tourné vers le bas.

La cage 104 est percée radialement d'une rangée annulaire de trous 114. Le mécanisme de verrouillage comprend une pluralité de billes 116 logées chacune dans un trou 114. Une seule bille 116 est représentée aux figures. Les trous 114 sont cylindriques et présentent vers l'intérieur une restriction locale de section, limitant ainsi le débattement radial des billes 116 vers l'intérieur.

Le mécanisme de verrouillage comprend en outre un verrou 118 monté coulissant verticalement sur le chariot 30. Ce verrou 118 présente la forme d'une douille munie d'une jupe 120 cylindrique entourant le chariot 30. La jupe 120 est agencée autour de la collerette 112.

La jupe 120 se prolonge vers le bas par une section de moindre diamètre formée par un alésage 122 qui est séparée de la jupe 120 par une face 123 d'épaulement qui est tournée vers le haut. L'alésage 122 présente dans sa face cylindrique intérieure une gorge 124. □□

Le verrou 118 comprend en outre une rampe 126 tronconique à conicité tournée vers la face 108 inférieure. La rampe 126 s'étend vers le haut depuis le bord d'extrémité supérieur de la gorge 124.

Un ressort 128 de rappel travaillant en compression est monté autour de la cage 104 en étant intercalé entre la face 123 d'épaulement et la collerette 112. Le verrou 118 est ainsi mobile verticalement, par coulissement de la rampe 126 sur la cage 104, entre une position de verrouillage, illustrée à la figure 5, dans laquelle la rampe 126 se trouve radialement au droit des billes 116 et exerce sur celles-ci un effort radial dirigé vers l'axe "A", et une position de libération, illustrée à la figure 6, dans laquelle la rampe 126 est écartée axialement des billes 116, et où la gorge 124 se trouve radialement au droit de celles-ci. Le ressort 128, qui plaque la rampe 126 vers le bas, sollicite en permanence le verrou 118 vers sa position de verrouillage.

Compte tenu de sa disposition périphérique, le verrou 118 est facilement accessible. Le tarage du ressort 128 est choisi pour permettre un déplacement manuel du verrou 118, à l'encontre de la force de rappel exercée par le ressort 128, vers sa position de libération.

Selon une variante de l'invention le tarage du ressort 128 est choisi pour interdire un déplacement manuel du verrou 118, à l'encontre de la force de rappel exercée par le ressort 128. Un outil est alors nécessaire pour faire coulisser le verrou 118 vers sa position de libération.

Le mécanisme de verrouillage comprend en outre un coulisseau 130 annulaire qui est monté dans l'espace annulaire 106 entre la bague 82 et la cage 104. Le coulisseau 130 est monté coulissant verticalement entre une position de verrouillage, illustrée à la figure 5, dans laquelle il est écarté au-dessus des billes 116, et une position de libération, illustrée à la figure 6, dans laquelle il se trouve radialement au droit des billes 116. Des ressorts 132 de rappel travaillant en compression, sont interposés entre le plafond 110 de l'espace 106 annulaire et le coulisseau 130 afin de solliciter en permanence le coulisseau 130 vers sa position de libération.

Des pions 134 radiaux de butée, dont un est représenté aux figures 5 et 6, s'étendent radialement vers l'extérieur depuis le coulisseau 130. Ces pions 134 sont reçus dans des rainures 136 verticales du chariot 30 afin de limiter verticalement dans les deux sens le coulissement du coulisseau 130 et empêcher ainsi son retrait de l'espace annulaire 106.

Le mécanisme de verrouillage peut adopter deux configurations, selon la position du verrou 118 et du coulisseau 130.

Dans une première configuration de libération, représentée à la figure 6, le verrou 118 et le coulisseau 130 sont tous deux dans leur position de libération. Les billes 116 sont maintenues radialement entre le coulisseau 130 d'une part et la gorge 124 du verrou 118 d'autre part. Les billes 116 présentent une partie faisant saillie radialement de leur logement 114 vers l'extérieur, contre laquelle vient buter la gorge 124 sous la force de rappel exercée par le ressort 128, ce qui limite la course du verrou 118 et empêche sa séparation du chariot 30. Dans cette première configuration, la course du verrou 118 est aussi limitée dans l'autre sens par la gorge 124 qui vient buter contre la partie des billes 116 en saillie. Le verrou 118 se trouve ainsi bloqué dans sa position de libération.

Dans une deuxième configuration de verrouillage, représentée notamment à la figure 5, le verrou 118 et le coulisseau 130 sont tous deux dans leur position de verrouillage. Le coulisseau 130, repoussé à l'encontre de son ressort 132 de rappel vers sa position de verrouillage et ainsi écarté des billes 116, permet à celles-ci de se déplacer radialement vers l'axe "A" dans une position interne de verrouillage, sous la pression radiale exercée par la rampe 126.

La fixation de la partie 96 mâle sur la partie 98 femelle s'effectue comme suit, à partir de la configuration de libération de la partie 98 femelle. On commence par disposer de manière coaxiale la partie 96 mâle et la partie 98 femelle. La partie femelle présente une forme de révolution autour de l'axe "A". Il n'est donc pas nécessaire d'orienter angulairement le nez 26 de tuyère autour de l'axe "A" par rapport au chariot 30.

Puis on emboîte la partie 96 mâle dans la partie 98 femelle, la couronne 60 pénétrant dans l'espace annulaire 106 en repoussant le coulisseau 130 à l'encontre de la force de rappel du ressort 132.

Tant que le coulisseau 130 n'a pas atteint sa position de verrouillage, les billes 116 restent immobiles, maintenant le verrou 118 dans sa position de libération. Dès lors que le coulisseau 130 a atteint sa position de verrouillage, les billes 116 sont repoussées radialement vers l'intérieur par la rampe 126 sous la poussée du ressort 128, le verrou 118 étant brusquement déplacé dans sa position de verrouillage. Dans cette position, la rampe 126 exerce une pression radiale sur les billes 116 qui, de la sorte, viennent s'appliquer radialement contre la portée 102 tronconique de la couronne 60, empêchant ainsi celle-ci d'être retirée de l'espace annulaire 106 et assurant la fixation de la partie 96 mâle sur la partie 98 femelle.□□

Le logement 114 est conformé de manière qu'en configuration verrouillée de la partie 98 femelle, les billes 116 dépassent suffisamment de leur logement 114 pour assurer une retenue solide de la partie 96 mâle, pouvant résister à une force de traction axiale susceptible d'être appliquée durant une opération de formage.

Pour séparer la partie 96 mâle de la partie 98 femelle, on repousse le verrou 118, manuellement ou à l'aide d'un outil, vers sa position de libération à l'encontre de la force de rappel exercée par le ressort 128. Dès lors que le verrou 118 a atteint sa position de libération, les billes 116 sont libres de se mouvoir radialement vers l'extérieur. Sous l'effet de la force de rappel exercée par le ressort 132, la partie 96 mâle est, par l'intermédiaire du coulisseau 130, repoussée hors de l'espace annulaire 106.

Lors de mouvement du nez 26 vers le bas, la portée 102 tronconique repousse les billes 116 radialement vers l'extérieur. Les billes 116 venant se loger dans la gorge 124 bloquent le verrou 118 en position de libération tout en permettant au coulisseau 130 d'occuper à nouveau sa position de libération. La partie 98 femelle retrouve ainsi sa configuration de libération.□

La tuyère 10 réalisée selon les enseignements de l'invention permet un échange de nez 26 de tuyère rapide grâce au mécanisme de verrouillage rapide.

En outre, le fait de disposer de nez 26 de tuyère prémontés pour chaque format de col 14 permet de changer la configuration de l'installation de fabrication très rapidement pour l'adapter à des formats variés de cols .

Le changement de nez 26 de tuyère est avantageusement réalisé par un dispositif (non représenté) de changement de nez 26, tel qu'un automate ou un bras robotisé.

Le dispositif comporte un premier organe (non représenté) de démontage qui est adapté pour saisir le verrou dans sa position de verrouillage. L'organe de démontage est par exemple formé par un outil tel qu'une pince ou une fourchette horizontale qui sont susceptibles d'être insérées dans une gorge 138 annulaire qui est réalisée dans la face externe du verrou 118. Une telle gorge 118 est notamment visible à la figure 6. L'organe de démontage est alors dans une position active.

L'organe de démontage est monté mobile verticalement sur le dispositif de manière à commander le verrou 118 entre sa position de verrouillage et sa position de libération par contact avec les bords de la gorge 138.

Le dispositif comporte en outre au moins un deuxième organe de maintien qui est adapté pour saisir le nez 26 de tuyère. L'organe de maintien est par exemple formé par une pince horizontale qui est susceptible d'entourer et de serrer extérieurement la cloche 39, juste au-dessous de la bride 64.

L'organe de maintien est monté mobile sur le dispositif de manière à déplacer verticalement le nez 26 de tuyère entre sa position emboîtée dans l'élément 98 femelle et une position déboîtée de l'élément 98 femelle.

L'organe de maintien est en outre susceptible de déplacer horizontalement le nez 26 de tuyère de manière à pouvoir ranger un nez 26 de tuyère en fin d'utilisation vers un espace de stockage (non représenté). L'organe de maintien est ainsi déplaçable entre la position déboîtée du nez 26, et une position de stockage dans laquelle le nez 26 est agencé au droit d'un espace de stockage situé radialement à l'écart de la tuyère 10.

Lors d'une opération de changement de nez 26 de tuyère, le dispositif déplace tout d'abord l'organe de démontage depuis une position inactive dans laquelle il est éloigné radialement de la tuyère 10 vers sa position active.

Le dispositif déplace aussi l'organe de maintien vers sa position de montage pour saisir le nez 26 dans sa position emboîtée.

Puis, l'organe de démontage commande le verrou 118 vers sa position de libération. L'organe de maintien permet de maintenir le nez 26 pour l'empêcher de tomber.

L'organe de maintien est ensuite déplacé verticalement vers le bas pour déboîter le nez 26 de tuyère. L'organe de maintien est ensuite déplacé radialement vers sa position de stockage dans laquelle il relâche le nez 26 de tuyère pour le poser dans l'espace de stockage.

L'organe de maintien est ensuite susceptible de saisir un nouveau nez 26 de tuyère dans l'espace de stockage pour l'amener vers jusqu'à sa position emboîté dans le chariot 30. L'organe de démontage aura préalablement été déplacé pour permettre au verrou 118 de revenir vers sa position de verrouillage permettant ainsi la fixation automatique du nouveau nez 26 sur le chariot 30.

Avantageusement, les mouvements du premier organe de démontage et/ou du deuxième organe de maintien sont commandés automatiquement.

Un tel dispositif permet d'effectuer un changement extrêmement rapide de nez 26 de tuyère.

## Revendications

1. Tuyère (10) pour le formage de récipients en matériau thermoplastique par injection d'un fluide sous pression dans un col (14) d'une préforme (12), la tuyère (10) comportant :
- un support (24) qui est muni d'une conduite (36) d'arrivée de fluide sous pression selon un axe (A) vertical ;
- un nez (26) de tuyère qui prolonge axialement la conduite (36) d'arrivée et qui est susceptible d'être raccordé de manière étanche au col (14) de la préforme (12) par l'intermédiaire d'au moins un tube (44) de stabilisation destiné à être coaxial au col (14) de la préforme (12) et de diamètre tel qu'un bord (46) circulaire d'extrémité inférieur du tube (44) est reçu contre un buvant (18) du col (14), le tube (44) de stabilisation étant monté coulissant axialement dans le nez (26) de tuyère entre une position inférieure de butée contre une première face (47) de butée du nez (26) et une position supérieure de butée contre une deuxième face (48) de butée du nez (26) ;
- des moyens de fixation amovible du nez (26) de tuyère sur le support (24) ;
le tube (44) de stabilisation est contraint élastiquement vers sa position inférieure de butée par l'intermédiaire d'un organe (58) élastique,
**caractérisée en ce que** l'organe (58) élastique est logé à demeure dans le support (24) et le tube (44) de stabilisation est emprisonné dans le nez (26) de tuyère indépendamment de la fixation du nez (26) de tuyère sur le support (24).

2. Tuyère (10) selon la revendication précédente, **caractérisée en ce que** le support (24) comporte un chariot (30) coulissant axialement entre une position supérieure de repos et une position inférieure de formage, et **en ce que** le nez (26) de tuyère est fixé sur le chariot (30).

3. Tuyère (10) selon la revendication précédente, **caractérisée en ce que** l'organe (58) élastique agit sur le tube (44) de stabilisation par l'intermédiaire d'une tige (74) qui est monté coulissante dans le support (24), la tige (74) étant reçue serrée dans un jonc (86) élastique porté par le tube (44) de stabilisation pour rendre le tube (44) de stabilisation temporairement solidaire en déplacement avec la tige (74).

4. Tuyère (10) selon l'une quelconque des revendications 2 ou 3, **caractérisée en ce qu'**un joint (88) d'étanchéité est interposé radialement entre le support (24) et le nez (26) de tuyère pour permettre un raccord étanche du nez (26) avec la conduite (36) d'arrivée en position de soufflage du chariot (30).

5. Tuyère (10) selon la revendication précédente, **caractérisée en ce que** le joint (88) d'étanchéité est porté par le support (24).

6. Tuyère (10) selon l'une quelconque des revendications précédentes, **caractérisée en ce que** les moyens de fixation amovible comportent une partie (96) mâle et une partie (98) femelle qui sont susceptibles d'être emboîtées l'une dans l'autre.

7. Tuyère (10) selon la revendication précédente, **caractérisé en ce que** les moyens de fixation comportent un mécanisme de verrouillage comportant une portée (102) tronconique qui est fixe sur la partie (96) mâle et comportant des billes (116) qui sont portées avec débattement radial par la partie (96) femelle, les billes (116) étant susceptibles d'occuper une position interne de verrouillage dans laquelle elles sont poussées contre la portée (102) conique pour fixer la partie (96) mâle avec la partie (98) femelle.

8. Tuyère (10) selon la revendication précédente, **caractérisée en ce que** la portée (102) tronconique présente une forme de révolution autour de l'axe (A) de tuyère de manière que les billes (116) puissent occuper leur position de verrouillage quelle que soit l'orientation du nez (26) de tuyère autour de son axe.

9. Tuyère (10) selon la revendication précédente, **caractérisée en ce que** la partie (98) femelle comporte une cage (104) périphérique munie de trous (114) dans lesquels sont logées des billes (116), et un verrou (118) muni d'une rampe (126) annulaire, monté autour de ladite cage (104), déplaçable entre une position de verrouillage dans laquelle la rampe (126) se trouve radialement au droit des billes (116), et une position de libération dans laquelle la rampe (126) est écartée des billes (116).

10. Tuyère (10) selon la revendication précédente, **caractérisée en ce que** le support (24) porte la cage (104) périphérique, la cage (104) délimitant radialement vers l'extérieur un espace (106) annulaire dans lequel est monté un coulisseau (130) déplaçable entre une position de verrouillage dans laquelle il se trouve radialement au droit des billes (116), et une position de libération dans laquelle il est écarté des billes (116).

11. Tuyère (10) selon la revendication précédente prise en combinaison avec l'une quelconque des revendications 2 à 5, **caractérisée en ce que** la cage (104) et le chariot (30) forment un ensemble monobloc.

12. Tuyère (10) selon l'une quelconque des revendications 10 ou 11, **caractérisée en ce que** le coulisseau (130) est sollicité vers sa position de verrouillage par au moins un ressort (132) de rappel.

13. Tuyère (10) selon l'une quelconque des revendications 9 à 12, **caractérisée en ce que** le verrou (118) est sollicité vers sa position de verrouillage par au moins un ressort (128) de rappel.

14. Tuyère (10) selon l'une quelconque des revendications 9 à 13, **caractérisé en ce que** le verrou (118) porte la rampe (126) annulaire.

15. Système comprenant une tuyère selon l'une des revendications précédentes et un dispositif de changement de nez (26) de la tuyère, caractérisé en ce le dispositif comporte un premier organe de démontage qui est adapté pour saisir le verrou (118) dans sa position de verrouillage, l'organe de démontage étant mobile de manière à commander le verrou (118) entre sa position de verrouillage et sa position de libération.

16. Système selon la revendication précédente, **caractérisé en ce que** le dispositif de changement comporte au moins un deuxième organe de maintien qui est adapté pour saisir un nez (26) de tuyère, l'organe de maintien étant mobile de manière à déplacer le nez (26) de tuyère entre sa position emboîtée dans l'élément femelle et une position déboîtée de l'élément femelle.

17. Système selon l'une quelconque des revendications 15 ou 16, **caractérisé en ce que** les mouvements du premier organe de démontage et/ou du deuxième organe de maintien sont commandés automatiquement.

## Patentansprüche

1. Düse (10) zum Formen von Behältern aus thermoplastischem Material durch Einspritzen eines unter Druck stehenden Fluids in einen Hals (14) eines Vorformlings (12), wobei die Düse (10) Folgendes umfasst:
- einen Träger (24), der über eine Leitung (36) für die Zufuhr eines unter Druck stehenden Fluids gemäß einer vertikalen Achse (A) verfügt;
- eine Düsenspitze (26), die die Zufuhrleitung (36) axial verlängert und die dicht an dem Hals (14) des Vorformlings (12) angebracht werden kann, mittels mindestens eines Stabilisierungsrohrs (44), das dazu bestimmt ist, zu dem Hals (14) des Vorformlings (12) koaxial zu sein, und das einen solchen Durchmesser aufweist, dass ein umlaufender Rand (46) am unteren Ende des Rohrs (44) an einer Mündungslippe (18) des Halses (14) anliegt, wobei das Stabilisierungsrohr (44) in der Düsenspitze (26) zwischen einer unteren Anschlagstellung gegen eine erste Anschlagfläche (47) der Spitze (26) und einer oberen Anschlagstellung gegen eine zweite Anschlagfläche (48) der Spitze (26) axial verschiebbar montiert ist;
- Mittel zum lösbaren Befestigen der Düsenspitze (26) an dem Träger (24);
wobei das Stabilisierungsrohr (44) durch ein elastisches Organ (58) elastisch in seine untere Anschlagstellung gezwungen wird,
**dadurch gekennzeichnet, dass** das elastische Organ (58) dauerhaft in dem Träger (24) aufgenommen ist und das Stabilisierungsrohr (44) unabhängig von der Befestigung der Düsenspitze (26) an dem Träger (24) in der Düsenspitze (26) eingebettet ist.

2. Düse (10) nach dem vorhergehenden Anspruch, **dadurch gekennzeichnet, dass** der Träger (24) einen Schlitten (30) umfasst, der zwischen einer oberen Ruhestellung und einer unteren Formungsstellung axial verschiebbar ist, und dass die Düsenspitze (26) an dem Schlitten (30) befestigt ist.

3. Düse (10) nach dem vorhergehenden Anspruch, **dadurch gekennzeichnet, dass** das elastische Organ (58) mittels einer Stange (74), die in dem Träger (24) verschiebbar montiert ist, auf das Stabilisierungsrohr (44) wirkt, wobei die Stange (74) in einem Federring (86), der durch das Stabilisierungsrohr (44) gehalten wird, eingeklemmt aufgenommen ist, um das Stabilisierungsrohr (44) vorübergehend fest mit der Stange (74) zu verbinden, sodass sich beide zusammen bewegen.

4. Düse (10) nach einem der Ansprüche 2 oder 3, **dadurch gekennzeichnet, dass** zwischen dem Träger (24) und der Düsenspitze (26) eine Dichtung (88) radial eingefügt ist, um in der Blasstellung des Schlittens (30) eine dichte Verbindung der Spitze (26) mit der Zufuhrleitung (36) zu ermöglichen.

5. Düse (10) nach dem vorhergehenden Anspruch, **dadurch gekennzeichnet, dass** die Dichtung (88) durch den Träger (24) gehalten wird.

6. Düse (10) nach einem der vorhergehenden Ansprüche, **dadurch gekennzeichnet, dass** die Mittel zum lösbaren Befestigen einen Steckteil (96) und einen Aufnahmeteil (98) umfassen, die ineinander gesteckt werden können.

7. Düse (10) nach dem vorhergehenden Anspruch, **dadurch gekennzeichnet, dass** die Befestigungsmittel einen Verriegelungsmechanismus umfassen, der eine kegelstumpfförmige Anlagefläche (102) umfasst, die sich fest an dem Steckteil (96) befindet, und der Kugeln (116) umfasst, die mit radialem Spiel durch den Aufnahmeteil (96) gehalten werden, wobei die Kugeln (116) eine innere Verriegelungsstellung einnehmen können, in der sie gegen die kegelförmige Anlagefläche (102) gedrückt werden, um den Steckteil (96) mit dem Aufnahmeteil (98) zu verbinden.

8. Düse (10) nach dem vorhergehenden Anspruch, **dadurch gekennzeichnet, dass** die kegelstumpfförmige Anlagefläche (102) um die Düsenachse (A) herum eine rotationssymmetrische Form aufweist, sodass die Kugeln (116) unabhängig von der Ausrichtung der Düsenspitze (26) um ihre Achse ihre Verriegelungsstellung einnehmen können.

9. Düse (10) nach dem vorhergehenden Anspruch, **dadurch gekennzeichnet, dass** der Aufnahmeteil (98) Folgendes umfasst: einen umlaufenden Käfig (104), der über Löcher (114) verfügt, in denen die Kugeln (116) aufgenommen sind, und einen Riegel (118), der über eine ringförmige Rampe (126) verfügt, um den Käfig (104) herum montiert ist und zwischen einer Verriegelungsstellung, in der sich die Rampe (126) radial an den Kugeln (116) befindet, und einer Freigabestellung, in der die Rampe (126) von den Kugeln (116) entfernt ist, bewegbar ist.

10. Düse (10) nach dem vorhergehenden Anspruch, **dadurch gekennzeichnet, dass** der Träger (24) den umlaufenden Käfig (104) hält, wobei der Käfig (104) radial nach außen einen ringförmigen Raum (106) begrenzt, in dem ein Schieber (130) montiert ist, der zwischen einer Verriegelungsstellung, in der er sich radial an den Kugeln (116) befindet, und einer Freigabestellung, in der er von den Kugeln (116) entfernt ist, bewegbar ist.

11. Düse (10) nach dem vorhergehenden Anspruch in Kombination mit einem der Ansprüche 2 bis 5, **dadurch gekennzeichnet, dass** der Käfig (104) und der Schlitten (30) eine einstückige Anordnung bilden.

12. Düse (10) nach einem der Ansprüche 10 oder 11, **dadurch gekennzeichnet, dass** der Schieber (130) durch mindestens eine Rückstellfeder (132) zu seiner Verriegelungsstellung hin vorgespannt wird.

13. Düse (10) nach einem der Ansprüche 9 bis 12, **dadurch gekennzeichnet, dass** der Riegel (118) durch mindestens eine Rückstellfeder (128) zu seiner Verriegelungsstellung hin vorgespannt wird.

14. Düse (10) nach einem der Ansprüche 9 bis 13, **dadurch gekennzeichnet, dass** der Riegel (118) die ringförmige Rampe (126) hält.

15. System, das eine Düse nach einem der vorhergehenden Ansprüche und eine Vorrichtung zum Wechseln der Düsenspitze (26) beinhaltet, **dadurch gekennzeichnet, dass** die Vorrichtung ein erstes Demontageorgan umfasst, das dazu angepasst ist, den Riegel (118) in seiner Verriegelungsstellung zu greifen, wobei das Demontageorgan mobil ist, um den Riegel (118) zwischen seiner Verriegelungsstellung und seiner Freigabestellung zu steuern.

16. System nach dem vorhergehenden Anspruch, **dadurch gekennzeichnet, dass** die Wechselvorrichtung mindestens ein zweites Halteorgan umfasst, das dazu angepasst ist, eine Düsenspitze (26) zu greifen, wobei das Halteorgan mobil ist, um die Düsenspitze (26) zwischen ihrer in den Aufnahmeteil eingesteckten Stellung und einer aus dem Aufnahmeteil ausgesteckten Stellung zu bewegen.

17. System nach einem der Ansprüche 15 oder 16, **dadurch gekennzeichnet, dass** die Bewegungen des ersten Demontageorgans und/oder des zweiten Halteorgans automatisch gesteuert werden.

## Claims

1. Nozzle (10) for forming containers made of thermoplastic material by injection of a pressurized fluid into a neck (14) of a preform (12), the nozzle (10) comprising:
- a mounting (24) fitted with an inlet pipe (36) for pressurized fluid along a vertical axis (A);
- a nozzle tip (26) that axially extends the inlet pipe (36) and that can be connected sealingly to the neck (14) of the preform (12) by means of at least one stabilization tube (44) designed to be coaxial with the neck (14) of the preform (12), the diameter of which is such that a circular lower end edge (46) of the tube (44) is received against a lip (18) of the neck (14), the stabilization tube (44) being mounted slidingly and axially in the nozzle tip (26) between a lower stop position against a first stop face (47) of the tip (26) and an upper stop position against a second stop face (48) of the tip (26);
- removable means for attaching the nozzle tip (26) to the mounting (24);
- the stabilization tube (44) being elastically pressed towards the lower stop position thereof by means of an elastic member (58),
**characterized in that** the elastic member (58) is permanently housed in the mounting (24) and the stabilization tube (44) is captively held in the nozzle tip (26) regardless of the attachment of the nozzle tip (26) to the mounting (24).

2. Nozzle (10) according to the preceding claim, **characterized in that** the mounting (24) includes a carriage (30) sliding axially between an upper idle position and a lower forming position, and **in that** the nozzle tip (26) is attached to the carriage (30).

3. Nozzle (10) according to the preceding claim, **characterized in that** the elastic member (58) acts on the stabilization tube (44) by means of a rod (74) that is mounted slidingly in the mounting (24), the rod (74) being clamped into an elastic retainer (86) on the stabilization tube (44) to temporarily constrain the stabilization tube (44) to move with the rod (74).

4. Nozzle (10) according to either one of Claims 2 and 3, **characterized in that** a seal (88) is placed radially between the mounting (24) and the nozzle tip (26) to enable a sealed connection between the tip (26) and the inlet pipe (36) in the blowing position of the carriage (30).

5. Nozzle (10) according to the preceding claim, **characterized in that** the seal (88) is borne by the mounting (24).

6. Nozzle (10) according to any one of the preceding claims, **characterized in that** the removable attachment means include a male part (96) and a female part (98) that can be fitted together.

7. Nozzle (10) according to the preceding claim, **characterized in that** the attachment means include a locking mechanism comprising a frustoconical seat (102) that is attached to the male part (96) and that includes balls (116) that are carried with radial clearance by the female part (96), the balls (116) being able to occupy an internal locking position in which they are pushed against the conical seat (102) to attach the male part (96) to the female part (98).

8. Nozzle (10) according to the preceding claim, **characterized in that** the frustoconical seat (102) has a revolved shape formed about the axis (A) of the nozzle such that the balls (116) can occupy their locking position regardless of the orientation of the nozzle tip (26) about its axis.

9. Nozzle (10) according to the preceding claim, **characterized in that** the female part (98) includes a peripheral cage (104) provided with holes (114) seating balls (116), and a lock (118) provided with an annular ramp (126), mounted about said cage (104), that can be moved between a locked position in which the ramp (126) is radially aligned with the balls (116), and a released position in which the ramp (126) is moved away from the balls (116).

10. Nozzle (10) according to the preceding claim, **characterized in that** the mounting (24) bears the peripheral cage (104), the cage (104) radially delimiting an external annular space (106) in which is mounted a slide (130) that can be moved between a locked position in which it is radially aligned with the balls (116), and a released position in which it is moved away from the balls (116).

11. Nozzle (10) according to the preceding claim taken in combination with any one of Claims 2 to 5, **characterized in that** the cage (104) and the carriage (30) form an integral assembly.

12. Nozzle (10) according to either one of Claims 10 and 11, **characterized in that** the slide (130) is pressed towards its locked position by at least one return spring (132).

13. Nozzle (10) according to any one of Claims 9 to 12, **characterized in that** the lock (118) is pressed towards its locked position by at least one return spring (128).

14. Nozzle (10) according to any one of Claims 9 to 13, **characterized in that** the lock (118) bears the annular ramp (126).

15. System comprising a nozzle according to one of the preceding claims and a device for swapping a tip (26) of the nozzle, **characterized in that** the device includes a first disassembly member that is designed to grasp the lock (118) in the locked position thereof, the disassembly member being movable such as to move the lock (118) between the locked position thereof and the released position thereof.

16. System according to the preceding claim, **characterized in that** the swapping device includes at least one second holding member that is designed to grasp a nozzle tip (26), the holding member being movable such as to move the nozzle tip (26) between the engaged position thereof inside the female element and a position disengaged from the female element.

17. System according to either one of Claims 15 and 16, **characterized in that** the movements of the first disassembly member and/or of the second holding member are controlled automatically.
